# FASCICULE DE BREVET EUROPEEN

(11) **EP 2 794 151 B1**
(45) Date de publication et mention de la délivrance du brevet: **01.11.2017**
(21) Numéro de dépôt: 12812994.7
(22) Date de dépôt: 21.12.2012
(51) Int. Cl.: B22F 3/00, B22F 3/105, B29C 67/00

(54) **PROCEDE ET APPAREIL POUR REALISER DES OBJETS TRIDIMENSIONNELS**
VERFAHREN UND VORRICHTUNG ZUR HERSTELLUNG VON DREIDIMENSIONALEN OBJEKTEN
METHOD AND APPARATUS FOR PRODUCING THREE-DIMENSIONAL OBJECTS

(30) Priorité: 23.12.2011 FR 1162367
(43) Date de publication de la demande: 29.10.2014
(73) Titulaire: COMPAGNIE GENERALE DES ETABLISSEMENTS MICHELIN, 63000 Clermont-Ferrand (FR)
(72) Inventeur: BESSAC, Christophe, F-63040 Clermont-Ferrand Cedex 9 (FR); PIALOT, Frédéric, F-63040 Clermont-Ferrand Cedex 9 (FR); WALRAND, Gilles, F-63040 Clermont-Ferrand Cedex 9 (FR)
(74) Mandataire: Noel, Luminita
(86) Numéro de dépôt international: PCT/EP2012/076630
(87) Numéro de publication internationale: WO 2013/092997

(56) Documents cités:
- EP-A1- 0 868 955
- EP-A1- 2 156 941
- EP-A1- 2 292 357
- DE-A1-102010 011 059
- US-A1- 2008 014 457

## Description

La présente invention est relative à un procédé et un appareil pour réaliser des objets tridimensionnels par consolidation successive, couche par couche, des zones sélectionnées d'une couche de matériau pulvérulent, les zones consolidées correspondant à des sections successives de l'objet tridimensionnel. Un tel procédé de fabrication connu également sous le nom de fabrication additive à base de poudre réalise, couche par couche, de manière partielle ou totale, un frittage ou une fusion des grains de poudre en utilisant un rayonnement électromagnétique (par exemple un faisceau laser) ou un faisceau de particules (par exemple un faisceau d'électrons).

Un exemple d'installation pour produire un objet tridimensionnel couche par couche à partir d'un matériau pulvérulent par fusion sélective de poudre est connu du document US 4863538. Une telle installation comprend une unité de contrôle à microprocesseur pour commander et diriger l'énergie d'un faisceau laser sur une couche de matériau pulvérulent, préalablement déposée sur un support de l'installation, pour obtenir une partie consolidée de celle-ci, cette opération étant répétée couche par couche. Les sections transversales successives de l'objet à obtenir sont implémentées dans le microprocesseur qui commande ainsi le faisceau laser pour réaliser la fusion des particules de poudre selon les contours des sections transversales de l'objet. Une telle installation permet de réaliser, avec de bonnes tolérances, des objets complexes qui sont difficiles à réaliser par les techniques de fabrication généralement connues. Toutefois, de par l'utilisation d'un faisceau laser de faible puissance, le temps de fabrication de l'objet est très long et, de ce fait, l'installation ne s'avère utile que pour la fabrication de prototypes d'assez faibles dimensions.

Le document US 6007764 décrit une solution pour améliorer la fabrication d'un objet tridimensionnel par fusion sélective de poudre, couche par couche, à l'aide d'un faisceau laser. Selon ce document, la poudre utilisée pour obtenir l'objet tridimensionnel, formée des particules opaques, est mélangée à des particules transparentes, telles de particules de silice, aptes à favoriser la transmission de l'énergie du faisceau laser au sein de la couche de poudre. Ainsi, on obtient une meilleure pénétration de la poudre par le faisceau laser et une meilleure adhérence de la dernière couche consolidée sur celles déjà solidifiées. Dans une variante, deux sources laser sont utilisées, une pour réaliser le préchauffage de la poudre et l'autre pour fusionner les particules de poudre. Permettant, certes, de travailler plus rapidement, sur des épaisseurs plus importantes de couche de poudre, l'addition de particules d'autre nature que celle du matériau de base de l'objet risque de modifier non seulement la composition, mais également les caractéristiques mécaniques de l'objet après solidification.

Des sources d'énergie à faisceau laser plus puissants ont été développées récemment. Toutefois, il a été constaté que le taux d'énergie absorbée par la poudre, notamment la poudre métallique est très faible, car une grande partie de l'énergie du faisceau laser est réfléchie par les particules de poudre. De ce fait, un tel procédé de fabrication utilisant un faisceau laser même puissant reste de faible productivité.

On connaît par ailleurs le document WO 01/81031 qui décrit un dispositif pour fabriquer un objet tridimensionnel comportant un support pour l'objet à construire, un élément de distribution de couches successives de poudre sur ledit support et un canon à électrons commandé par une unité de contrôle pour réaliser la fusion sélective de sections transversales de l'objet à réaliser formées successivement à partir des couches de poudre successivement déposées sur ledit support. Le dispositif comporte par ailleurs des moyens pour détecter la distribution de la température sur la surface de la couche de poudre afin de commander les paramètres de fonctionnement du canon à électrons pour éviter l'apparition de différences de température au niveau des différentes couches et donc des déformations de l'objet obtenu. Un tel dispositif à canon d'électrons permet de développer une puissance supérieure à celle des dispositifs à laser précédemment décrits et, de ce fait, est plus efficace et permet une meilleure productivité que les dispositifs à laser. Toutefois, de par le fait que la focalisation du faisceau d'électrons est difficile à réaliser et à cause des phénomènes de polarisation des grains de poudre à l'endroit de l'impact du faisceau d'électrons, il a été constaté que la qualité de la surface de l'objet obtenu avec un dispositif à canon d'électrons est inférieure à celle obtenue avec un dispositif à laser.

Par ailleurs, le document WO 2004/056510 décrit un procédé de production de corps tridimensionnels par fusion successive conjointe de zones choisies d'un lit de poudre, à l'aide d'un canon d'électrons. Selon ce document, le schéma de fonctionnement du canon à électrons est tel que l'acheminement d'énergie se fait dans plusieurs zones de fusion qui se propagent simultanément à travers la zone choisie pour former la section transversale du corps tridimensionnel. Tout en permettant d'augmenter encore plus la productivité, de la même manière que le dispositif du document précédent, ce procédé ne permet pas d'obtenir des pièces ayant une bonne qualité de surface. En effet, dû au fait que les électrons du faisceau sont fortement accélérés, ils ont une énergie cinétique importante lorsqu'ils frappent la couche de poudre ce qui a pour conséquence d'éjecter la matière pulvérulente autour du point d'impact du faisceau. De surcroît, de par la charge électrique des particules composant le faisceau d'électrons, la matière pulvérulente est polarisée au point d'impact et, de ce fait, un mouvement des particules se crée autour de celui-ci, ayant pour conséquence que la consolidation de la couche de poudre se fait avec une rugosité, voire même une porosité, importantes.

Le document EP 2156941 décrit une méthode de fabrication d'un filtre à air ou à huile par fusion de particules de poudre à l'aide d'un faisceau laser ou d'un faisceau d'électrons. Ce document décrit l'utilisation préférentielle d'un faisceau d'électrons pour réaliser un filtre à huile, car on obtient une porosité plus importante qu'avec le faisceau laser, ce qui permet de piéger les particules d'huile.

On connaît par ailleurs du document EP 2292357, une machine de fabrication additive à base de poudre céramique ou vitrocéramique qui utilise deux faisceaux laser, un premier faisceau laser défocalisé pour réaliser le préchauffage de la poudre et un deuxième faisceau laser focalisé pour réaliser la fusion de la poudre. Des faisceaux d'électrons peuvent également être utilisés à la place des faisceaux laser. On obtient, certes, des objets ayant des propriétés mécaniques améliorées, sans toutefois se préoccuper de l'état de surface des objets ainsi réalisés.

On connaît également le document DE 10 2010 0111059 qui décrit une autre machine de fabrication additive à base de poudre comportant deux faisceaux d'électrons utilisés pour fusionner simultanément, couche par couche, plusieurs zones de la couche de poudre. On arrive, certes, à obtenir des objets tridimensionnels avec une bonne productivité, mais sans se préoccuper non plus de l'état de surface des objets réalisés.

Le but de l'invention est de pallier à ces inconvénients et de proposer un procédé et un appareil pour réaliser des objets tridimensionnels par fusion sélective de poudre, permettant d'obtenir des objets ayant des formes complexes et une bonne qualité de leur état de surface avec une bonne productivité.

Un autre but de l'invention est de proposer un procédé amélioré et un appareil performant et rapide pour réaliser des objets tridimensionnels par fusion sélective de poudre permettant d'obtenir des objets ayant la géométrie souhaitée et des bonnes caractéristiques mécaniques, sans présenter de déformation ou de tension interne après fabrication.

Ces buts sont atteints avec un procédé de fabrication d'objet tridimensionnel par consolidation successive, couche par couche, des zones sélectionnées d'une strate de poudre, les zones consolidées correspondant à des sections successives de l'objet tridimensionnel, chaque couche étant divisée en une partie centrale intérieure et une bordure extérieure, ledit procédé comportant les étapes suivantes prises dans l'ordre :
a - déposer une couche de poudre sur un support;
b - effectuer la fusion de la bordure extérieure de ladite couche de poudre au moyen d'un faisceau laser en provenance d'une première source d'énergie en réalisant le déplacement relatif du faisceau laser de ladite première source d'énergie par rapport à l'objet selon une trajectoire prédéterminée qui suit le contour de ladite bordure extérieure correspondant au contour de la section transversale de l'objet de manière à fusionner sélectivement ladite couche ;
c - effectuer la fusion de la partie centrale intérieure de la couche de poudre au moyen d'un faisceau d'électrons en provenance d'une deuxième source d'énergie en réalisant le déplacement relatif du faisceau d'électrons de ladite deuxième source d'énergie par rapport à l'objet par balayage de ladite partie centrale intérieure selon une trajectoire prédéterminée correspondant à la partie centrale intérieure de la section transversale de l'objet de manière à fusionner sélectivement ladite couche; ou
d - répéter N fois les étapes a et b de manière à former plusieurs couches de matière fusionnée superposées constituant une partie de la bordure extérieure dudit objet et effectuer ensuite l'étape c de manière à fusionner la partie centrale intérieure de l'objet correspondant aux N couches de poudre ;
e - répéter les étapes a à c ou a, b et d jusqu'à la consolidation de toutes les couches de l'objet.

Plus particulièrement, le procédé de l'invention utilise en combinaison deux sources différentes d'énergie, utilisant des paramètres de fonctionnement différents ce qui permet d'obtenir un objet présentant différentes propriétés de surface, mécaniques ou métallo graphiques au niveau de sa périphérie (ou peau) et dans son volume (ou coeur), en affectant chaque source à une partie de l'objet à réaliser, la peau respectivement le coeur. Ainsi, le procédé de l'invention permet de réaliser une consolidation de la peau de l'objet avec une source à faisceau laser, se déplaçant assez lentement, mais permettant d'obtenir une surface de faible rugosité et ayant une bonne dureté. Il permet également d'obtenir une consolidation plus rapide du coeur de l'objet avec la source à faisceau d'électrons, plus énergétique que la première et se déplaçant plus rapidement que celle-ci, la rugosité obtenue étant toutefois plus importante qu'avec la première source. La peau et le coeur de l'objet sont obtenus par consolidation successive conjointe des zones formant, les unes, la périphérie extérieure et, les autres, la partie centrale intérieure de l'objet, ces zones étant définies couche par couche et correspondant à des sections transversales (on comprend des sections réalisées avec un plan horizontal parallèle à la table de travail) de l'objet. Ce procédé convient alors à la fabrication des objets tridimensionnels ayant une géométrie complexe où les dimensions de la surface sont faibles pour la périphérie par rapport à celles du coeur, pour une section donnée.

On obtient, ainsi, pour chaque couche de poudre, une consolidation de la périphérie ou peau de l'objet, sur une faible épaisseur, en utilisant un faisceau laser qui se déplace lentement, pour obtenir une faible rugosité, tout en réduisant le temps d'utilisation du laser de par les faibles dimensions (qui se résument au contour) de la surface consolidée. On obtient également, de préférence simultanément, une consolidation rapide du coeur de l'objet, soit lors d'une opération couche par couche soit lorsque l'on solidifie le coeur de plusieurs couches simultanément, en réglant les paramètres de fonctionnement du faisceau d'électrons pour augmenter la vitesse de fusion. Vu le rendement énergétique de chaque source, rendement qui est très élevé pour le faisceau d'électrons (d'environ 90%) et très faible pour le faisceau laser (d'environ 10%), en combinant les deux sources de manière à leur affecter à l'une le coeur de l'objet et à l'autre l'obtention de la peau de l'objet, on arrive à obtenir des objets complexes avec une forte cadence.

De préférence, pour une section donnée, la largeur de ladite bordure extérieure est d'au plus 1mm.

Une telle bordure extérieure doit présenter une assez faible épaisseur afin de pouvoir fabriquer entièrement et de manière efficace un objet par fusion sélective de couches de poudre en utilisant une source lente pour la périphérie et une source rapide pour le coeur de l'objet, compte tenu du rapport des vitesses des deux sources. Par ailleurs, compte tenu du diamètre du faisceau d'électrons et de sa zone d'influence, l'épaisseur de la bordure doit être suffisante afin de pouvoir conserver ses propriétés de surface même après le passage du faisceau d'électrons aux frontières de la périphérie déjà travaillée par le faisceau laser.

Avantageusement, on commence la fusion par faisceau laser au niveau d'une zone éloignée du centre et par faisceau d'électrons au niveau d'une zone proche du centre de l'objet. Ceci permet d'obtenir une première partie périphérique consolidée qui enferme et maintient en place la poudre située au centre et non encore fusionnée, et ceci tout en permettant de garder les deux faisceaux suffisamment éloignés pour plus de facilité de déplacement de l'un par rapport à l'autre.

Dans certaines variantes de réalisation de l'invention, le procédé comprend une étape supplémentaire de fusion par faisceau laser d'une bordure intérieure ou d'un cordon agencés au sein de la partie centrale intérieure. Ceci permet d'obtenir différentes formes et/ou différentes densités de matière au coeur de l'objet.

Avantageusement, le rapport entre l'énergie fournie par le faisceau d'électrons et l'énergie fournie par le faisceau laser est compris entre 4 /1 et 9/1.

Ainsi, la partie la plus importante de l'énergie du système est affectée au coeur de la pièce. Ceci permet de fabriquer rapidement et de manière efficace un objet complexe par fusion sélective de couches de poudre avec deux sources ayant des puissances et des vitesses de déplacement différentes, la source la plus puissante étant affectée au coeur de l'objet.

De préférence, les particules qui composent ladite poudre ont un diamètre moyen compris entre 5 et 300µm.

Dans une variante de réalisation, ladite partie centrale intérieure présente une structure ouverte. Une telle structure ouverte peut être un maillage tridimensionnel, une structure en nid d'abeilles, voir une structure poreuse. Ceci permet de diminuer le poids de la pièce, ou de l'utiliser comme frein thermique pour empêcher la transmission des calories, etc., voire de l'utiliser comme matrice et de pouvoir y injecter un autre produit afin d'en améliorer les propriétés, etc.

De préférence, au moins une étape supplémentaire de préchauffage de la couche de poudre à l'aide d'au moins l'une desdites première ou deuxième sources d'énergie. Ceci permet de réduire les gradients thermiques lors de la fabrication et donc les déformations de l'objet réalisé.

Avantageusement, le procédé comporte une étape supplémentaire de finition de la partie centrale intérieure et de la bordure extérieure de l'objet en effectuant la fusion de la dernière couche de poudre à l'aide du faisceau laser. Ceci permet d'obtenir un objet dont la dernière couche (de sommet) présente une bonne rugosité sur toute sa surface et permet, par exemple, d'améliorer la tenue à la fatigue par réduction de fissures au niveau de la peau, ou d'améliorer la transmission thermique. Par ailleurs, on peut également obtenir une amélioration de l'endurance de l'objet ainsi réalisé.

De préférence, la puissance spécifique du faisceau d'électrons est comprise entre 2 et 50.10⁶ W/cm².

De préférence, la puissance spécifique du faisceau laser est comprise entre 200 et 2400 kW/cm².

Le rendement énergétique plus important de la source à faisceau d'électrons est dû principalement à sa puissance plus élevée, comparée à celle d'une source laser. De plus, le pilotage du faisceau d'électrons est réalisé par un système à champs magnétiques, alors que le pilotage du faisceau laser se fait par un système à miroirs massiques, ce qui fait que le déplacement du faisceau d'électrons se fait plus rapidement.

Le procédé de l'invention permet d'utiliser des poudres métalliques ou céramiques. Dans une variante préférée de l'invention, on utilise une poudre métallique. Ceci permet de réaliser rapidement des pièces métalliques de forme complexe ayant une bonne densité, et qui résistent bien aux différentes sollicitations mécaniques.

Avantageusement, le point de focalisation du faisceau d'électrons est situé au-dessus de la surface de ladite couche de poudre. On arrive ainsi à obtenir une zone d'impact du faisceau sur la couche de poudre de surface importante et de faible profondeur, ce qui permet d'obtenir une fusion rapide sans pénétration en profondeur des couches déjà consolidées.

De préférence, ledit objet tridimensionnel est un moule ou une partie de moule pour la fabrication d'un pneumatique. Le procédé de l'invention permet de réaliser des pièces de forme complexe et convient plus particulièrement à la fabrication d'un moule ou d'une partie de moule pour pneumatique, telle une garniture de moule ayant des éléments de petites dimensions, tels que des lamelles ou des cordons.

Les buts de l'invention sont également atteints avec un appareil de fabrication d'objet tridimensionnel par consolidation successive, couche par couche, des zones sélectionnées d'une couche de poudre, lesdites zones correspondant à des sections successives de l'objet tridimensionnel, chaque couche étant divisée en une partie centrale intérieure et une bordure extérieure, ledit appareil comportant :
- des moyens de support dudit objet ;
- des moyens de distribution aptes à appliquer au moins une couche de poudre sur ledit support ou sur une couche précédemment consolidée dudit objet ;
- une première source d'énergie à faisceau laser réalisée de manière à effectuer la fusion de la bordure extérieure de ladite couche de poudre par le déplacement relatif du faisceau laser de ladite première source d'énergie par rapport à l'objet selon une trajectoire prédéterminée qui suit le contour de ladite bordure extérieure correspondant au contour de la section transversale de l'objet de manière à fusionner sélectivement ladite couche ;
- une deuxième source d'énergie à faisceau d'électrons réalisée de manière à effectuer la fusion de la partie centrale intérieure de ladite couche de poudre par le déplacement relatif du faisceau d'électrons de ladite deuxième source d'énergie par rapport à l'objet par balayage de ladite partie centrale intérieure selon une trajectoire prédéterminée correspondant à la partie centrale intérieure de la section transversale de l'objet de manière à fusionner sélectivement ladite couche
- une unité de contrôle à microprocesseur pour commander le déplacement desdits faisceaux en fonction de la géométrie dudit objet et d'un algorithme de déplacement implémentés dans la mémoire de l'unité de contrôle.

Avantageusement, lesdits moyens et sources d'énergie sont placés à l'intérieur d'une enceinte sous vide. Ceci permet le fonctionnement efficace de deux sources d'énergie à faisceau d'électrons et laser dans une enceinte commune, tout en empêchant les phénomènes d'oxydation lors de la fusion laser ou de dispersion d'électrons et en assurant l'évacuation des gaz issus des opérations effectuées lors de la fabrication de l'objet.

Avantageusement, l'appareil de l'invention comprend des moyens de mesure de la température de la couche de poudre reliés à ladite unité de contrôle. Ceci permet d'ajuster plus finement les paramètres de fonctionnement des sources d'énergie afin de les adapter à l'objet à fabriquer.

Par une source à faisceau laser on comprend au moins une telle source et par une source à faisceau d'électrons on comprend au moins une telle source, plusieurs sources pouvant être utilisées en combinaison au sein du procédé et de l'appareil de l'invention.

L'invention sera mieux comprise grâce à la suite de la description, qui s'appuie sur les figures suivantes :
- la figure 1 est une vue en coupe montrant schématiquement un appareil pour fabriquer un objet tridimensionnel selon l'invention ;
- la figure 2 est une vue de dessus de l'objet montrant schématiquement les zones d'impact des deux faisceaux énergétiques utilisés avec l'appareil de l'invention ;
- les figures 3a à 3c illustrent schématiquement des vues de dessus des différents objets réalisés avec l'appareil et le procédé de l'invention ;
- les figures 4a à 4c illustrent schématiquement des vues en coupe des différentes couches consolidées avec l'appareil et le procédé de l'invention, selon des variantes de réalisation de l'invention.

Sur les différentes figures, les éléments identiques ou similaires portent la même référence. Leur description n'est donc pas systématiquement reprise. Il faut noter par ailleurs que les épaisseurs des couches, les largeurs des bordures ou cordons, les dimensions des faisceaux de rayonnement ou celles de l'objet réalisé ne sont pas représentés à une échelle cohérente mais au contraire volontairement faussée dans le but de rendre les figures lisibles.

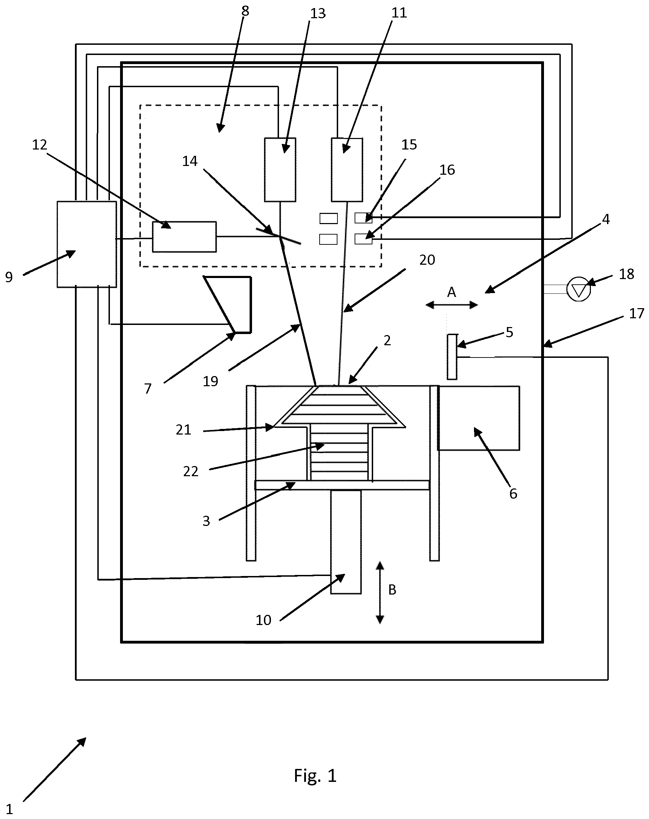

La figure 1 illustre un appareil 1 pour fabriquer un objet tridimensionnel 2. L'appareil comprend une table de travail représentée par un plateau horizontal 3 sur lequel est construit l'objet 2 pour lequel il forme un support. L'appareil comprend également des moyens de distribution de poudre 4, en provenance d'un réservoir de poudre 7 situé au-dessus du plateau 3, lesdits moyens de distribution étant aptes à appliquer une fine couche de poudre sur le plateau 3, par exemple à l'aide de la raclette 5. La raclette 5 est mise en mouvement par des moyens d'actionnement (non représentés) pour effectuer un mouvement de translation alternative, dans un plan horizontal, selon la double flèche A, au-dessus du plateau 3. Ainsi, la raclette 5 étale la poudre en une couche fine, à partir de la sortie du réservoir 7, le surplus de poudre étant poussé par la raclette 5 dans un bac de récupération 6. La raclette 5 est de préférence ramenée dans sa position initiale à proximité de la sortie du réservoir 7 avant le commencement d'un nouveau cycle de mise en couche de la poudre. Dans une variante, un dispositif de compactage (non représenté sur les dessins) de la couche de poudre étalée peut également être prévu. La couche de poudre étalée sur le plateau 3 forme ainsi une strate qui est fusionnée sélectivement à l'aide d'un ou plusieurs faisceaux énergétiques en provenance d'un ensemble de sources d'énergie 8. L'objet tridimensionnel 2 est réalisé par la fusion sélective ou frittage sélectif des poudres et construit par superposition des couches sur la base d'une modélisation de l'objet par un ordinateur. Le faisceau énergétique (ou les faisceaux énergétiques) est (sont) piloté(s) par un microprocesseur d'une unité de contrôle 9 comprenant la modélisation de l'objet pour fabriquer l'objet par fusion ou frittage successif de couches de poudre superposées. Lors d'un cycle de fabrication de l'objet, le plateau 3 est abaissé régulièrement, après consolidation de chaque couche de poudre, d'une distance égale à l'épaisseur de la couche de poudre consolidée. Pour ceci, le plateau 3 est relié à un mécanisme d'entraînement en un mouvement de translation verticale, selon la double flèche B, par exemple en reliant la tige verticale 10 de support du plateau 3 à un mécanisme de type pignon-crémaillère ou vis-écrou actionné par un servomoteur ou par un moteur pas à pas.

Plus particulièrement selon l'invention, l'appareil 1 comprend deux sources différentes d'énergie: un canon à faisceau d'électrons 11 et une source laser 12.

La source laser 12 est par exemple un laser à CO₂ ou un laser Nd :Yag qui a une puissance égale ou supérieure à 500 W. La source laser 1 est reliée à une unité de pilotage 13 d'un miroir galvanométrique 14 qui permet d'orienter le faisceau laser 19 issu de la source 12 par rapport à l'objet 2 en fonction des informations envoyées par l'unité de contrôle 9. Le faisceau laser peut être déplacé par l'unité de contrôle 9 à une vitesse d'environ 10m/s.

Le canon à électrons 11 comprend, de manière connue, un circuit de haute tension qui produit la tension d'accélération des électrons émis par l'électrode émettrice du canon qui est, elle, reliée à une source de courant permettant son chauffage pour produire l'émission d'électrons. Le faisceau d'électrons 20 issus du canon est orienté par des bobines déflectrices 16 par rapport à l'objet 2 en fonction des informations envoyées par l'unité de contrôle 9. L'appareil 1 comprend également des bobines de focalisation 15 du faisceau permettant de réaliser une focalisation du faisceau d'électrons par rapport à la zone travaillée de l'objet 2. La puissance du canon d'électrons est d'environ 3000W et son faisceau peut être déplacé à une vitesse d'environ 1000m/s.

Les composants de l'appareil 1 sont agencés à l'intérieur d'une enceinte étanche 17 reliée à une pompe à vide 18 qui maintient un vide d'environ 10⁻⁴-10⁻⁶ mbar à l'intérieur de l'enceinte. Un tel niveau de pression assure un bon fonctionnement du canon à électrons et permet d'éviter les phénomènes d'oxydation lorsque la fusion sélective de la poudre est effectuée par la source laser. La pompe à vide 18 est choisie de manière à ce que son débit soit suffisant pour prendre en compte le dégazage résultant du cycle thermique ainsi qu'un éventuel débit de fuite de l'enceinte 17.

Les parois de l'enceinte 17 sont de préférence en acier et sont suffisamment épaisses, l'épaisseur des parois pouvant être d'environ 20 à 30 mm, pour assurer la protection contre les rayons X de l'opérateur. L'enceinte 17 comporte par ailleurs des hublots (non représentés) permettant à l'opérateur de visualiser les différentes zones à l'intérieur de l'appareil, tout en assurant la protection contre les rayons X émis par le canon à électrons et contre les rayons lumineux émis par la source laser.

L'unité de contrôle 9 commande l'alimentation et le pilotage des sources d'énergie, l'alimentation en poudre depuis le réservoir et la distribution par les moyens de distribution d'une couche de poudre, ainsi que le mouvement du plateau. Dans une variante de l'invention, l'appareil comprend de plus des moyens de mesure de la température, tels une caméra IR ou CCD qui sont aptes à communiquer à l'unité de contrôle des informations concernant la température de la couche de poudre et permettre d'ajuster ainsi les paramètres de fonctionnement du canon d'électrons et de la source laser pendant les phases de fusion sélective des couches de poudre.

Selon l'invention, on utilise le faisceau laser 19 en provenance de la source 12 pour consolider, couche par couche, la peau ou bordure extérieure 21 de l'objet 2 et le faisceau d'électrons 20 en provenance du canon 11 pour consolider, couche par couche, ou plusieurs couches simultanément, la partie centrale intérieure 22 ou coeur de l'objet 2.

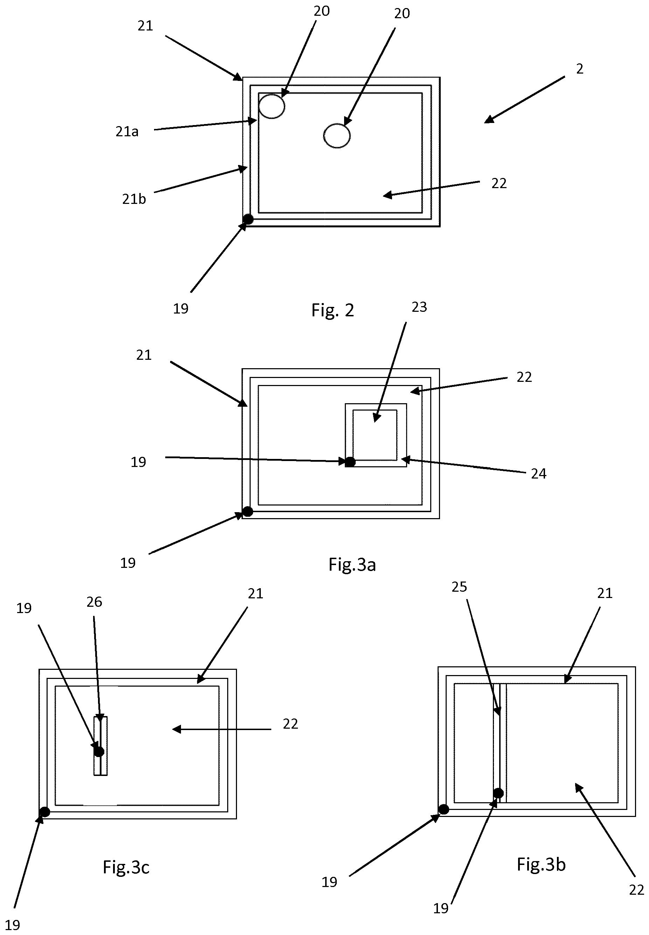

Tel que mieux visible à la figure 2, le faisceau laser 19 réalise la bordure extérieure 21 de l'objet, couche par couche, par plusieurs cordons successifs : un cordon interne 21a et un cordon externe 21b, en partant de l'intérieur et en allant vers l'extérieur de la bordure extérieure 21. Le faisceau d'électrons 20 est déplacé sur la surface de la couche de poudre, correspondant à la partie centrale intérieure 22, située à l'intérieur du cordon interne 21a, en commençant au centre de la surface de la partie centrale intérieure 22 et en finissant à proximité du cordon interne 21a, sa direction de déplacement étant dans le sens de rapprochement du cordon déjà réalisé par le faisceau laser. Le faisceau d'électrons 20 fusionne le coeur de la pièce couche par couche ou une fois toutes les N couches déjà fusionnées en périphérie par le faisceau laser 19.

On obtient ainsi rapidement la consolidation de la couche de poudre déposée grâce au déplacement rapide du faisceau d'électrons qui balaye une grande surface, qui est celle de la partie centrale de la couche, le déplacement du faisceau laser, certes plus lent, s'effectue, lui, sur un trajet plus court, qui est celui du contour de ladite partie centrale, et a lieu en même temps que le déplacement du faisceau d'électrons. Par ailleurs, il a été constaté, lors des tests effectués en laboratoire, que les caractéristiques métallurgiques sont conservées à l'interface reliant la peau et le coeur de l'objet ainsi obtenu.

Les figures 3a à 3c illustrent différentes géométries réalisées par consolidation des couches de poudre avec l'appareil et selon le procédé de l'invention. Ainsi, la figure 3a illustre une vue similaire à celle de la figure 2, mais comportant de plus une bordure intérieure 24 renfermant une partie centrale intérieure restreinte 23. La bordure intérieure 24 est réalisée par déplacement du faisceau laser 19 et la zone centrale intérieure restreinte 23 par déplacement du faisceau d'électrons 20 à l'intérieur de la bordure intérieure 24. La bordure intérieure 24 peut être réalisée par un faisceau laser en provenance de la même source que celui qui réalise la bordure 21, la bordure 24 étant réalisée consécutivement à la bordure 21, ou elle peut être réalisée par un faisceau laser en provenance d'une deuxième source laser agencée dans la même enceinte que la première et, dans ce cas, les bordures 21 et 24 peuvent être réalisées simultanément. De la même manière, la partie centrale restreinte 23 est réalisée consécutivement à la partie centrale intérieure 22 lorsque l'on utilise un même faisceau d'électrons ou, dans une variante, les deux parties centrales 22, 23 sont consolidées simultanément par deux faisceaux d'électrons issus des sources différentes.

Les figures 3b et 3c illustrent des vues similaires à celle de la figure 2, mais où l'on réalise, à l'aide d'un faisceau laser 19, des cordons 25, 26 disposés dans la partie centrale intérieure 22. Ainsi, la figure 3b illustre un cordon long 25 relié à la bordure extérieure 21 et la figure 3c un cordon court 26 isolé au sein de la partie centrale intérieure 22. Les cordons sont représentés de manière schématique par des formes rectangulaires sur les figures, mais il est bien entendu possible qu'ils soient réalisés selon d'autres formes géométriques souhaitées à l'aide du faisceau laser 19 piloté par l'unité centrale 9. De la même manière que précédemment décrit, le faisceau laser utilisé pour réaliser les cordons 25, 26 peut provenir de la même source laser que celle qui réalise la bordure 21 ou d'une source différente.

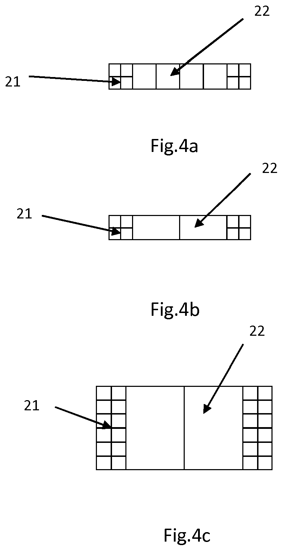

Les figures 4a à 4c montrent schématiquement des vues en coupe des différentes couches consolidées avec l'appareil et le procédé de l'invention, selon des variantes de réalisation de l'invention. Ainsi, la figure 4a illustre la consolidation d'une couche de poudre dont la bordure extérieure 21 est réalisée en plusieurs passages du faisceau laser 19 et la partie centrale intérieure 22 est réalisée en plusieurs passages du faisceau d'électrons 20. La figure 4b est une vue similaire à celle de la figure 4a, mais où la partie centrale intérieure est consolidée avec un nombre de passages de faisceau d'électrons moins important que dans la précédente. La figure 4c illustre une variante où la bordure extérieure a été réalisée par consolidation successive de plusieurs couches de poudre (trois couches dans l'exemple représenté) et la partie centrale intérieure 22 est consolidée par le faisceau d'électrons pour toutes les couches déposées pour lesquelles la bordure extérieure 21 avait déjà été consolidée par le faisceau laser.

A titre d'exemple, le diamètre du faisceau laser utilisé est compris entre 5µm et 100µm et le diamètre du faisceau d'électrons utilisé est compris entre 20µm et 500µm.

Les poudres utilisées avec le procédé de l'invention sont des poudres métalliques, telles les poudres de Ti, Ni-Ti, les superalliages, les alliages d'aluminium, d'invar, d'aciers inoxydables, de CoCr, de maraging et d'autres métaux ou des poudres céramiques. Selon la géométrie et les caractéristiques mécaniques ou de surface de l'objet à réaliser, ainsi que selon l'épaisseur de la couche finale visée, le diamètre moyen des particules de la poudre peut varier de quelques microns, par exemple 5µm, à 300µm. Selon les paramètres de fonctionnement des faisceaux énergétiques utilisés et selon les poudres utilisées, l'épaisseur d'une couche de poudre peut varier de quelques micromètres, par exemple 10µm, à plusieurs centaines de micromètres, par exemple 500µm.

L'unité de contrôle 9 est apte à commander séparément l'actionnement du faisceau laser 19 et du faisceau d'électrons 20 en fonction de la géométrie de l'objet à réaliser. On comprend ainsi que, pour certaines sections, l'unité de contrôle 9 est apte à commander uniquement le faisceau laser 19 pour créer une bordure extérieure autour d'une partie intérieure centrale creuse, le faisceau d'électrons 20 étant, lui, à l'arrêt.

D'autres variantes et modes de réalisation de l'invention peuvent être envisagés sans sortir du cadre de ses revendications. Ainsi, on peut utiliser plusieurs sources à faisceau d'électrons et/ou plusieurs sources à faisceau laser pour réaliser la fusion d'une couche de poudre selon le procédé et avec l'appareil de l'invention.

## Revendications

1. Procédé de fabrication d'objet tridimensionnel (2) par consolidation successive, couche par couche, des zones sélectionnées d'une strate de poudre, les zones consolidées correspondant à des sections successives de l'objet tridimensionnel, chaque couche étant divisée en une partie centrale intérieure (22) et une bordure extérieure (21), ledit procédé comportant les étapes suivantes prises dans l'ordre :
a - déposer une couche de poudre sur un support;
b - effectuer la fusion de la bordure extérieure (21) de ladite couche de poudre au moyen d'un faisceau laser (19) en provenance d'une première source d'énergie en réalisant le déplacement relatif du faisceau laser de ladite première source d'énergie par rapport à l'objet (2) selon une trajectoire prédéterminée qui suit le contour de ladite bordure extérieure (21) correspondant au contour de la section transversale de l'objet de manière à fusionner sélectivement ladite couche ;
c - effectuer la fusion de la partie centrale intérieure (22) de la couche de poudre au moyen d'un faisceau d'électrons (20) en provenance d'une deuxième source d'énergie en réalisant le déplacement relatif du faisceau d'électrons de ladite deuxième source d'énergie par rapport à l'objet (2) par balayage de ladite partie centrale intérieure (22) selon une trajectoire prédéterminée correspondant à la partie centrale intérieure de la section transversale de l'objet de manière à fusionner sélectivement ladite couche; ou
d - répéter N fois les étapes a et b de manière à former plusieurs couches de matière fusionnée superposées constituant une partie de la bordure extérieure (21) dudit objet (2) et effectuer ensuite l'étape c de manière à fusionner la partie centrale intérieure (22) de l'objet (2) correspondant aux N couches de poudre ;
e - répéter les étapes a à c ou a, b et d jusqu'à la consolidation de toutes les couches de l'objet.

2. Procédé selon la revendication 1, **caractérisé en ce que**, pour une section donnée, la largeur de ladite bordure extérieure (21) est d'au plus 1mm.

3. Procédé selon l'une des revendications 1 ou 2, **caractérisé en ce que** l'on commence la fusion par faisceau laser (19) au niveau d'une zone éloignée du centre de l'objet (2) et par faisceau d'électrons (20) au niveau d'une zone proche du centre de l'objet (2).

4. Procédé selon l'une des revendications précédentes, **caractérisé en ce qu'**il comprend une étape supplémentaire de fusion par faisceau laser d'une bordure intérieure (24) ou d'un cordon (25,26) agencés au sein de la partie centrale intérieure (22).

5. Procédé selon l'une des revendications précédentes, **caractérisé en ce que** le rapport entre l'énergie fournie par le faisceau d'électrons (20) et l'énergie fournie par le faisceau laser (19) est compris entre 4/1 et 9/1.

6. Procédé selon l'une des revendications précédentes, **caractérisé en ce que** ladite partie centrale intérieure (22) présente une structure ouverte.

7. Procédé selon l'une des revendications précédentes, **caractérisé en ce qu'**il comporte au moins une étape supplémentaire de préchauffage de la couche de poudre à l'aide d'au moins l'une desdites première ou deuxième sources d'énergie.

8. Procédé selon l'une des revendications précédentes, **caractérisé en ce qu'**il comporte une étape supplémentaire de finition de la partie centrale intérieure (22) et de la bordure extérieure (21) de l'objet en effectuant la fusion de la dernière couche de poudre à l'aide du faisceau laser (19).

9. Procédé selon l'une des revendications précédentes, **caractérisé en ce que** la puissance spécifique du faisceau d'électrons (20) est comprise entre 2.10⁶ et 50.10⁶ W/cm².

10. Procédé selon l'une des revendications précédentes, **caractérisé en ce que** la puissance spécifique du faisceau laser (19) est comprise entre 200 et 2400 kW/cm².

11. Procédé selon l'une des revendications précédentes, **caractérisé en ce que** ladite poudre est une poudre métallique.

12. Procédé selon l'une des revendications précédentes, caractérisé en ce le point de focalisation du faisceau d'électrons (20) est situé au-dessus de la surface de ladite couche de poudre.

13. Procédé selon l'une des revendications précédentes, **caractérisé en ce que** ledit objet tridimensionnel (2) est un moule ou une partie de moule pour la fabrication d'un pneumatique.

14. Appareil de fabrication d'objet tridimensionnel (2) par consolidation successive, couche par couche, des zones sélectionnées d'une strate de poudre, les zones consolidées correspondant à des sections successives de l'objet tridimensionnel chaque couche étant divisée en une partie centrale intérieure (22) et une bordure extérieure (21), ledit appareil comportant :
- des moyens de support dudit objet (2);
- des moyens de distribution aptes à appliquer au moins une couche de poudre sur ledit support ou sur une couche précédemment consolidée dudit objet (2);
- une première source d'énergie à faisceau laser (19) reliée à une unité de pilotage (13) qui permet d'orienter le faisceau laser (19) de manière à effectuer la fusion de la bordure extérieure (21) de ladite couche de poudre par le déplacement relatif du faisceau laser (19) de ladite première source d'énergie par rapport à l'objet (2) selon une trajectoire prédéterminée qui suit le contour de ladite bordure extérieure (21) correspondant au contour de la section transversale de l'objet (2) de manière à fusionner sélectivement ladite couche ;
- une deuxième source d'énergie à faisceau d'électrons (20), le faisceau d'électrons (20) étant orienté par des bobines déflectrices (16) de manière à effectuer la fusion de la partie centrale intérieure (22) de ladite couche de poudre par le déplacement relatif du faisceau d'électrons (20) de ladite deuxième source d'énergie par rapport à l'objet (2) par balayage de ladite partie centrale intérieure (22) selon une trajectoire prédéterminée correspondant à la partie centrale intérieure de la section transversale de l'objet de manière à fusionner sélectivement ladite couche ;
- une unité de contrôle (9) à microprocesseur pour commander le déplacement desdits faisceaux en fonction de la géométrie dudit objet (2) et d'un algorithme de déplacement implémentés dans la mémoire de l'unité de contrôle (9).

15. Appareil selon la revendication 14, **caractérisé en ce que** lesdits moyens et sources d'énergie sont placés à l'intérieur d'une enceinte étanche (17) reliée à une pompe à vide (18).

## Patentansprüche

1. Verfahren zur Herstellung eines dreidimensionalen Gegenstands (2) durch aufeinanderfolgende Verfestigung, Lage für Lage, der ausgewählten Zonen einer Pulverschicht, wobei die verfestigten Zonen aufeinanderfolgenden Abschnitten des dreidimensionalen Gegenstands entsprechen, wobei jede Lage in einen inneren zentralen Teil (22) und einen Außenrand (21) aufgeteilt ist, wobei das Verfahren die folgenden Schritte in der Reihenfolge aufweist:
a- Aufbringen einer Pulverlage auf einen Träger;
b- Ausführen des Schmelzens des Außenrands (21) der Pulverlage mittels eines von einer ersten Energiequelle kommenden Laserstrahls (19), indem die relative Verschiebung des Laserstrahls von der ersten Energiequelle bezüglich des Gegenstands (2) gemäß einer vorbestimmten Bahn durchgeführt wird, die der Kontur des Außenrands (21) folgt, der der Kontur des Querschnitts des Gegenstands entspricht, um die Lage selektiv zu schmelzen;
c- Durchführen des Schmelzens des inneren zentralen Teils (22) der Pulverlage mittels eines von einer zweiten Energiequelle kommenden Elektronenstrahls (20), indem die relative Verschiebung des Elektronenstrahls von der zweiten Energiequelle bezüglich des Gegenstands (2) durch Überstreichen des inneren zentralen Teils (22) gemäß einer vorbestimmten Bahn durchgeführt wird, die dem inneren zentralen Teil des Querschnitts des Gegenstands entspricht, um die Lage selektiv zu schmelzen; oder
d- N Mal Wiederholen der Schritte a und b, um mehrere übereinander liegende Lagen geschmolzenen Materials zu formen, die einen Teil des Außenrands (21) des Gegenstands (2) bilden, und anschließendes Ausführen des Schritts c, um den inneren zentralen Teil (22) des Gegenstands (2) entsprechend den N Pulverlagen zu schmelzen;
e- Wiederholen der Schritte a bis c oder a, b und d bis zur Verfestigung aller Lagen des Gegenstands.

2. Verfahren nach Anspruch 1, **dadurch gekennzeichnet, dass** die Breite des Außenrands (21) für einen gegebenen Abschnitt höchstens 1 mm beträgt.

3. Verfahren nach einem der Ansprüche 1 oder 2, **dadurch gekennzeichnet, dass** das Schmelzen durch Laserstrahl (19) im Bereich einer von der Mitte des Gegenstands (2) entfernten Zone und durch Elektronenstrahl (20) im Bereich einer der Mitte des Gegenstands (2) nahen Zone begonnen wird.

4. Verfahren nach einem der vorhergehenden Ansprüche, **dadurch gekennzeichnet, dass** es einen zusätzlichen Schritt des Laserstrahlschmelzen eines Innenrands (24) oder eines Streifens (25, 26) enthält, die innerhalb des inneren zentralen Teils (22) angeordnet sind.

5. Verfahren nach einem der vorhergehenden Ansprüche, **dadurch gekennzeichnet, dass** das Verhältnis zwischen der vom Elektronenstrahl (20) gelieferten Energie und der vom Laserstrahl (19) gelieferten Energie zwischen 4/1 und 9/1 liegt.

6. Verfahren nach einem der vorhergehenden Ansprüche, **dadurch gekennzeichnet, dass** der innere zentrale Teil (22) eine offene Struktur hat.

7. Verfahren nach einem der vorhergehenden Ansprüche, **dadurch gekennzeichnet, dass** es mindestens einen zusätzlichen Schritt des Vorerwärmens der Pulverlage mit Hilfe mindestens einer der ersten oder zweiten Energiequellen enthält.

8. Verfahren nach einem der vorhergehenden Ansprüche, **dadurch gekennzeichnet, dass** es einen zusätzlichen Schritt der Endbearbeitung des inneren zentralen Teils (22) und des Außenrands (21) des Gegenstands aufweist, indem das Schmelzen der letzten Pulverlage mit Hilfe des Laserstrahls (19) ausgeführt wird.

9. Verfahren nach einem der vorhergehenden Ansprüche, **dadurch gekennzeichnet, dass** die spezifische Leistung des Elektronenstrahls (20) zwischen 2.10⁶ und 50.10⁶ W/cm² liegt.

10. Verfahren nach einem der vorhergehenden Ansprüche, **dadurch gekennzeichnet, dass** die spezifische Leistung des Laserstrahls (19) zwischen 200 und 2400 kW/cm² liegt.

11. Verfahren nach einem der vorhergehenden Ansprüche, **dadurch gekennzeichnet, dass** das Pulver ein metallisches Pulver ist.

12. Verfahren nach einem der vorhergehenden Ansprüche, **dadurch gekennzeichnet, dass** der Brennpunkt des Elektronenstrahls (20) sich oberhalb der Oberfläche der Pulverlage befindet.

13. Verfahren nach einem der vorhergehenden Ansprüche, **dadurch gekennzeichnet, dass** der dreidimensionale Gegenstand (2) eine Form oder ein Formteil zur Herstellung eines Luftreifens ist.

14. Gerät zur Herstellung eines dreidimensionalen Gegenstands (2) durch aufeinanderfolgende Verfestigung, Lage für Lage, der ausgewählten Zonen einer Pulverschicht, wobei die verfestigten Zonen aufeinanderfolgenden Abschnitten des dreidimensionalen Gegenstands entsprechen, wobei jede Lage in einen inneren zentralen Teil (22) und einen Außenrand (21) aufgeteilt ist, wobei das Gerät aufweist:
- Einrichtungen zum Tragen des Gegenstands (2);
- Verteilungseinrichtungen, die mindestens eine Pulverlage auf den Träger oder auf eine vorher verfestigte Lage des Gegenstands (2) aufbringen können;
- eine erste Laserstrahl-Energiequelle (19), die mit einer Steuereinheit (13) verbunden ist, die es ermöglicht, den Laserstrahl (19) so auszurichten, dass das Schmelzen des Außenrands (21) der Pulverlage durch die relative Verschiebung des Laserstrahls (19) von der ersten Energiequelle bezüglich des Gegenstands (2) gemäß einer vorbestimmten Bahn ausgeführt wird, die der Kontur des Außenrands (21) folgt, der der Kontur des Querschnitts des Gegenstands (2) entspricht, um die Lage selektiv zu schmelzen;
- eine zweite Elektronenstrahl-Energiequelle (20), wobei der Elektronenstrahl (20) von Ablenkspulen (16) so ausgerichtet wird, dass er das Schmelzen des inneren zentralen Teils (22) der Pulverlage durch die relative Verschiebung des Elektronenstrahls (20) von der zweiten Energiequelle bezüglich des Gegenstands (2) durch Überstreichen des inneren zentralen Teils (22) gemäß einer vorbestimmten Bahn ausführt, die dem inneren zentralen Teil des Querschnitts des Gegenstands entspricht, um die Lage selektiv zu schmelzen;
- eine Kontrolleinheit (9) mit Mikroprozessor, um die Verschiebung der Strahlen abhängig von der Geometrie des Gegenstands (2) und von einem Verschiebungsalgorithmus zu steuern, die in den Speicher der Kontrolleinheit (9) eingebaut sind.

15. Gerät nach Anspruch 14, **dadurch gekennzeichnet, dass** die Einrichtungen und Energiequellen im Inneren eines dichten Raums (17) platziert sind, der mit einer Vakuumpumpe (18) verbunden ist.

## Claims

1. Process for manufacturing a three-dimensional object (2) by successive layer-by-layer consolidation of selected zones of a powder stratum, the consolidated zones corresponding to successive sections of the three-dimensional object, each layer being divided into a central internal portion (22) and an external border (21), said process comprising the following steps in order:
a - depositing a powder layer on a holder;
b - fusing the external border (21) of said powder layer by means of a laser beam (19) originating from a first energy source by moving the laser beam of said first energy source relative to the object (2) along a preset path that follows the contour of said external border (21) corresponding to the contour of the cross section of the object so as to selectively fuse said layer; and
c - fusing the central internal portion (22) of the powder layer by means of an electron beam (20) originating from a second energy source, by moving the electron beam of said second energy source relative to the object (2) so as to sweep it over said central internal portion (22) along a preset path corresponding to the central internal portion of the cross section of the object so as to selectively fuse said layer; or
d - repeating steps a and b N times so as to form a plurality of superposed layers of fused material forming a portion of the external border (21) of said object (2) and then carrying out step c so as to fuse the central internal portion (22) of the object (2) corresponding to the N powder layers; and
e - repeating steps a to c or a, b and d until all the layers of the object have been consolidated.

2. Process according to Claim 1, **characterized in that**, for a given section, the width of said external border (21) is at most 1 mm.

3. Process according to either one of Claims 1 and 2, **characterized in that** the fusion by the laser beam (19) starts in a zone distant from the centre of the object (2), and the fusion by the electron beam (20) starts in a zone near the centre of the object (2).

4. Process according to one of the preceding claims, **characterized in that** it comprises an additional step of fusion by the laser beam of an internal border (24) or of a bead (25, 26) arranged in the central internal portion (22).

5. Process according to one of the preceding claims, **characterized in that** the ratio between the energy delivered by the electron beam (20) and the energy delivered by the laser beam (19) is comprised between 4:1 and 9:1.

6. Process according to one of the preceding claims, **characterized in that** said central internal portion (22) has an open structure.

7. Process according to one of the preceding claims, **characterized in that** it comprises at least one additional step of preheating the powder layer using at least one of said first or second energy sources.

8. Process according to one of the preceding claims, **characterized in that** it comprises an additional step of finishing the central internal portion (22) and the external border (21) of the object by fusing the last powder layer using the laser beam (19).

9. Process according to one of the preceding claims, **characterized in that** the specific power of the electron beam (20) is comprised between 2×10⁶ and 50×10⁶ W/cm².

10. Process according to one of the preceding claims, **characterized in that** the specific power of the laser beam (19) is comprised between 200 and 2400 kW/cm².

11. Process according to one of the preceding claims, **characterized in that** said powder is a metal powder.

12. Process according to one of the preceding claims, **characterized in that** the focal point of the electron beam (20) is located above the surface of said powder layer.

13. Process according to one of the preceding claims, **characterized in that** said three-dimensional object (2) is a mould or a mould portion for the manufacture of a tyre.

14. Apparatus for manufacturing a three-dimensional object (2) by successive, layer-by-layer consolidation of selected zones of a powder stratum, the consolidated zones corresponding to successive sections of the three-dimensional object, each layer being divided into a central internal portion (22) and an external border (21), said apparatus comprising:
- means for holding said object (2);
- distributing means able to apply at least one powder layer to said holder or to a previously consolidated layer of said object (2);
- a first energy source emitting a laser beam (19), which source is connected to a control unit (13) that allows the laser beam (19) to be oriented so as to fuse the external border (21) of said powder layer by moving the laser beam (19) of said first energy source relative to the object (2) along a preset path that follows the contour of said external border (21) corresponding to the contour of the cross section of the object (2) so as to selectively fuse said layer;
- a second energy source emitting an electron beam (20), the electron beam (20) being oriented by deflecting coils (16) so as to fuse the central internal portion (22) of said powder layer by moving the electron beam (20) of said second energy source relative to the object (2) so as to sweep it over said central internal portion (22) along a preset path corresponding to the central internal portion of the cross section of the object so as to selectively fuse said layer; and
- a microprocessor-based control unit (9) for controlling the movement of said beams depending on the geometry of said object (2) and a movement algorithm loaded into the memory of the control unit (9).

15. Apparatus according to Claim 14, **characterized in that** said means and energy sources are placed inside a vacuum chamber (17) connected to a vacuum pump (18).
